# EUROPEAN PATENT APPLICATION

(11) **EP 4 645 448 A1**
(43) Date of publication of application: **05.11.2025**
(21) Application number: 23910761.8
(22) Date of filing: 27.12.2023
(51) Int. Cl.: H01M 4/36, H01M 4/525, H01M 10/0525, H01M 10/42

(54) **LITHIUM-SUPPLEMENTING MATERIAL, POSITIVE ELECTRODE, ELECTROCHEMICAL APPARATUS, AND ELECTRIC DEVICE**

(30) Priority: 30.12.2022 CN 202211739170
(71) Applicant: BYD Company Limited, Shenzhen, Guangdong 518118 (CN)
(72) Inventor: ZHANG, Baishuang, Shenzhen, Guangdong 518118 (CN); GAO, Lili, Shenzhen, Guangdong 518118 (CN); JIN, Lina, Shenzhen, Guangdong 518118 (CN); LI, Xiangyu, Shenzhen, Guangdong 518118 (CN)
(74) Representative: Schott, Jakob Valentin
(86) International application number: PCT/CN2023/142476
(87) International publication number: WO 2024/140843

(57) **Abstract**

This disclosure provides a lithium supplement material, including Li₅Fe_{1-X}M_{X}O₄ and a cladding layer disposed on a surface of Li₅Fe₁₋ₓMₓO₄. In Li₅Fe₁₋ₓMₓO₄, M is at least one of Ni, Mn, Ru, Cr, Cu, Nb, Al, Mg, Ca, Ga, Ti, and Mo, and 0 ≤ x ≤ 0.2. The cladding layer includes M'-doped zinc oxide or M'-doped composite oxide based on zinc oxide, and M' is an ion capable of forming a substitutional solid solution with zinc oxide or composite oxide based on zinc oxide.

## Description

### CROSS-REFERENCE TO RELATED APPLICATIONS

This disclosure claims priority to and benefits of Chinese Patent Application No. 202211739170.2, filed with the China National Intellectual Property Administration on December 30, 2022, which is incorporated herein by reference in its entirety.

### TECHNICAL FIELD

This disclosure relates to the field of electrochemical technologies, and specifically, to a lithium supplement material, a positive electrode, an electrochemical apparatus, and a power consumption device.

### BACKGROUND

During initial charge of a lithium-ion battery, a solid electrolyte interphase film (solid electrolyte interphase, which is usually referred to as an SEI film) is formed on a negative electrode surface. Consequently, active lithium in a positive electrode is consumed, and initial efficiency of the lithium-ion battery is low. Currently, irreversible capacity loss of the most widely used graphite negative electrode may be up to 10%. For silicon-based and tin-based negative electrodes with a high specific capacity, irreversible capacity loss may be up to 30% or more, thereby greatly reducing energy density of the lithium-ion battery. Therefore, the initial efficiency and cycle performance of the lithium-ion battery are usually improved by using a lithium supplement method. A current lithium supplement material has a problem of low lithium supplement efficiency, poor chemical stability, and/or poor conductivity.

### SUMMARY

This disclosure is intended to resolve at least one of technical problems in the conventional technology to some extent. Therefore, this disclosure provides a lithium supplement material, a positive electrode, an electrochemical apparatus, and a power consumption device.

Specifically, a first aspect of this disclosure provides a lithium supplement material, including Li₅Fe₁₋ₓMₓO₄ and a cladding layer disposed on a surface of Li₅Fe₁₋ₓMₓO₄. The cladding layer includes M' ion-doped ZnO or ZnO composite oxide, and the M' ion is an ion capable of forming a substitutional solid solution with ZnO or ZnO composite oxide. In Li₅Fe₁₋ₓMₓO₄, M is at least one of Ni, Mn, Ru, Cr, Cu, Nb, Al, Mg, Ca, Ga, Ti, or Mo. In Li₅Fe₁₋ₓMₓO₄, 0 ≤ x ≤ 0.2.

A second aspect of this disclosure provides a positive electrode, including a positive electrode current collector and a positive electrode material layer. The positive electrode material layer includes a positive electrode active material and the lithium supplement material provided in the first aspect of this disclosure.

A third aspect of this disclosure provides an electrochemical apparatus, including the positive electrode provided in the second aspect of this disclosure.

A fourth aspect of this disclosure provides a power consumption device, including the electrochemical apparatus provided in the third aspect of this disclosure.

### DESCRIPTION OF EMBODIMENTS

The following clearly and completely describes the technical solutions in embodiments of this disclosure. Clearly, the described embodiments are merely some rather than all of embodiments of this disclosure. Based on embodiments of this disclosure, all other embodiments obtained by a person of ordinary skill in the art without creative efforts fall within the protection scope of this disclosure.

Each molecule of Li₅Fe₁₋ₓMₓO₄ may provide four Li⁺, has a high specific capacity, and has a potential for efficiently supplementing lithium to an electrochemical apparatus. However, Li₅Fe₁₋ₓMₓO₄ is highly prone to deterioration in air, and easily chemically reacts with carbon dioxide and water in air to form lithium hydroxide and lithium carbonate on a surface. Formation of an alkaline compound on the surface not only affects a homogenization process (it is easy to form a jelly texture, affecting subsequent coating), but also causes capacity loss, cycle performance deterioration, and poor battery consistency. In addition, a conductivity of Li₅Fe₁₋ₓMₓO₄ is low, leading to a result that a capacity of Li₅Fe_{1-X}M_{X}O₄ cannot be fully utilized, and a small charging rate needs to be used during decomposition. Cladding semiconductor oxide on the surface of Li₅Fe₁₋ₓMₓO₄ may form compact oxide on the surface of Li₅Fe₁₋ₓMₓO₄, and can improve stability of Li₅Fe₁₋ₓMₓO₄ in air to some extent. However, overall conductivity of a material obtained by cladding only the semiconductor oxide on the surface of Li₅Fe_{1-X}M_{X}O₄ is still poor. If a semiconductor oxide layer and a carbon layer are cladded on the surface of Li₅Fe₁₋ₓMₓO₄, the stability of Li₅Fe₁₋ₓMₓO₄ in air can be improved, and a material with improved conductive performance can be obtained. However, excessive cladding layers reduce a content of an effective lithium supplement substance in the material, thereby affecting a lithium supplement capacity of the material.

An implementation of this disclosure provides a lithium supplement material, including Li₅Fe₁₋ₓMₓO₄ and a cladding layer disposed on a surface of Li₅Fe₁₋ₓMₓO₄. The cladding layer includes M'-doped zinc oxide (ZnO) or M'-doped composite oxide based on zinc oxide (ZnO), and M' is an ion capable of forming a substitutional solid solution with ZnO or the composite oxide based on ZnO. In Li₅Fe₁₋ₓMₓO₄, M is at least one of Ni, Mn, Ru, Cr, Cu, Nb, Al, Mg, Ca, Ga, Ti, and Mo. In Li₅Fe₁₋ₓMₓO₄, 0 ≤ x ≤ 0.2.

In the implementation of this disclosure, "including Li₅Fe₁₋ₓMₓO₄ and a cladding layer disposed on a surface of Li₅Fe₁₋ₓMₓO₄" may be understood as follows: Li₅Fe_{1-X}M_{X}O₄ is granular, a cladding layer including M' ion-doped ZnO or a composite oxide based on ZnO is disposed on a surface of Li₅Fe₁₋ₓMₓO₄ particles, and M' ions in the cladding layer form a solid solution with ZnO or the composite oxide based on ZnO. The cladding layer may inhibit a chemical reaction of the Li₅Fe₁₋ₓMₓO₄ particles with carbon dioxide and water in air, block a reaction between the lithium supplement material and an external environment, so that the lithium supplement material has good stability, and an overall conductive capability of the lithium supplement material can be improved. When the lithium supplement material is used in an electrochemical apparatus, for example, a lithium-ion battery, formation time can be greatly shortened, initial coulomb efficiency and cycle performance of the battery can be significantly improved, and battery consistency is good.

In the implementation of this disclosure, M' ion-doped ZnO may be understood as composite oxide formed by M' with Zn. In the composite oxide, a part or all of M' forms a substitutional solid solution (substitutional solid solution) with ZnO. The M'-doped composite oxide based on ZnO may be understood as composite oxide formed by M' and Zn with another element. In the composite oxide, a part or all of M' forms a substitutional solid solution with the composite oxide based on ZnO. The M' ion may be understood as an ion capable of forming a substitutional solid solution with ZnO, including but not limited to any one or more of quadrivalent ions of elements such as silicon (Si), germanium (Ge), titanium (Ti), zirconium (Zr), molybdenum (Mo), and tin (Sn) and trivalent ions of elements such as aluminum (Al), molybdenum (Mo), titanium (Ti), gallium (Ga), indium (In), and yttrium (Y).

In the implementation of this disclosure, "a cladding layer disposed on a surface of Li₅Fe₁₋ₓMₓO₄" may clad a part of the surface of Li₅Fe₁₋ₓMₓO₄, or may clad the entire surface of Li₅Fe₁₋ₓMₓO₄. In some implementations of this disclosure, the cladding layer clads the entire surface of Li₅Fe₁₋ₓMₓO₄. In this way, a reaction between the lithium supplement material and an external environment can be better blocked, and stability and a conductive capability of the lithium supplement material are improved.

In some implementations of this disclosure, x in Li₅Fe₁₋ₓMₓO₄ satisfies 0 ≤ x ≤ 0.1. x satisfies 0 ≤ x ≤ 0.1, so that a capacity of the lithium supplement material can be balanced. On the one hand, electronic conductivity of the material is improved, so that a capacity of the material is fully utilized. On the other hand, a content of the effective substance is not significantly reduced, and a capacity of the material is not reduced.

In some implementations of this disclosure, Li₅Fe_{1-X}M_{X}O₄ is Li₅FeO₄.

In some implementations of this disclosure, M' is at least one of Si⁴⁺, Ge⁴⁺, Ti⁴⁺, Zr⁴⁺, Mo⁴⁺, Sn⁴⁺, Al³⁺, Mo³⁺, Ti³⁺, Ga³⁺, In³⁺, and Y³⁺. In this case, the M' ion can better form a substitutional solid solution with ZnO, to enhance conductive performance of the lithium supplement material.

In some implementations of this disclosure, M' is at least one of Zr⁴⁺, Mo³⁺, Ti³⁺, Ga³⁺, and Al³⁺. An ion radius of Zr⁴⁺, Mo³⁺, Ti³⁺, or Ga³⁺ is close to that of Zn²⁺, which can better introduce an impurity defect. Al³⁺ can obtain a large doping ratio in Zn²⁺, to improve solid solubility, thereby obtaining higher carrier concentration, and enhancing conductive performance of the lithium supplement material. In addition, costs of A1³⁺ are low. Considering the costs, Al³⁺ is also a good choice.

In some implementations of this disclosure, the composite oxide based on ZnO is a composite oxide formed by at least one of SnO, ZrO₂, and B₂O₃ with ZnO. The composite oxide formed by at least one of SnO, ZrO₂, and B₂O₃ with ZnO may improve stability and a conductive capability of the lithium supplement material.

In some implementations of this disclosure, in M'-doped ZnO or the M'-doped composite oxide based on ZnO, an amount of substance of M' accounts for 1 mol% to 5 mol% of a sum of amounts of substance of non-oxygen elements. In other words, a molar content of M' is 1% to 5% by using an integral molar quantity of the non-oxygen elements in M'-doped ZnO or the M'-doped composite oxide based on ZnO as a reference. In M'-doped ZnO, the non-oxygen element may be understood as M' and Zn, and the sum of amounts of substance of the non-oxygen elements may be understood as a sum of amounts of substance of M' and Zn. In the M'-doped composite oxide based on ZnO, the non-oxygen elements may be understood as M', Zn, and other non-oxygen elements such as Sn, B, and Zr in the composite oxide. When a content of M' is within this range, the carrier concentration in the cladding layer may be maintained within a proper range, so as to ensure that the cladding layer can better inhibit a chemical reaction of Li₅Fe₁₋ₓMₓO₄ with carbon dioxide and water in air, and further improve conductive performance of the lithium supplement material. In M'-doped ZnO or the M'-doped composite oxide based on ZnO, a percentage of the amount of substance of M' to the sum of amounts of substance of the non-oxygen elements may be, for example, 1 mol%, 1.5 mol%, 2 mol%, 2.5 mol%, 3 mol%, 3.5 mol%, 4 mol%, 4.5 mol%, and 5 mol%.

In some implementations of this disclosure, in M'-doped ZnO or the M'-doped composite oxide based on ZnO, an amount of substance of M' accounts for 2 mol% to 3 mol% of a sum of amounts of substance of non-oxygen elements.

In some implementations of this disclosure, a median particle diameter D50 of the lithium supplement material is 7 µm to 13 µm. When the D50 of the lithium supplement material is within this range, the lithium supplement material can have better conductive performance, to facilitate uniform dispersion of the lithium supplement material, and improve lithium supplement efficiency. A specific median particle diameter D50 of the lithium supplement material may be, for example, 7 µm, 8 µm, 9 µm, 10 µm, 11 µm, 12 µm, or 13 µm.

In some implementations of this disclosure, D90 of the lithium supplement material is less than or equal to 30 µm. When D90 of the lithium supplement material is within this range, the lithium supplement material can have better conductive performance, to facilitate uniform dispersion of the lithium supplement material, and improve lithium supplement efficiency. D90 of the lithium supplement material may be, for example, 1 µm, 5 µm, 10 µm, 15 µm, 20 µm, 25 µm, or 30 µm.

A test method for the foregoing D50 and D90 includes: performing a laser particle size test on a material according to GB/T19077-2016 Particle size analysis - Laser diffraction methods*,* to obtain a particle size distribution curve of the material; and reading, from the curve, a corresponding particle diameter obtained when a cumulative volume distribution percentage of the material reaches 50% and 90%, that is, obtaining D50 and D90.

In some implementations of this disclosure, in the lithium supplement material, a content of M'-doped ZnO or the M'-doped composite oxide based on ZnO is 1 wt.% to 6 wt.%. In other words, a mass content of the composite oxide including M' and Zn is 1 wt.% to 6 wt.% by using total mass of the lithium supplement material as a reference. When the composite oxide including M' and Zn is within this range, conductivity and air stability of the lithium supplement material can be improved, and excessive reduction in the content of effective lithium supplement substance can be avoided, thereby avoiding affecting a capacity of the lithium supplement material.

This disclosure further provides a positive electrode, including a positive electrode current collector and a positive electrode material layer. The positive electrode material layer includes a positive electrode active material and the lithium supplement material provided in this disclosure. Because the lithium supplement material provided in this disclosure has good stability and conductivity, the positive electrode active material includes the lithium supplement material. When the positive electrode is used in an electrochemical apparatus, for example, a lithium-ion battery, initial coulomb efficiency and cycle performance of a battery can be significantly improved, and battery consistency is good.

In the positive electrode in this disclosure, the positive electrode material layer may be a single layer or a plurality of layers.

When the positive electrode material layer is a single layer, in the positive electrode material layer, the lithium supplement material is mixed with the positive electrode active material. It should be noted that, in addition to the lithium supplement material and the positive electrode active material, the positive electrode material layer may further include some necessary auxiliary materials such as a conductive agent and an adhesive based on a requirement. For a solid-state battery system, the positive electrode material layer may not include an adhesive, but includes a solid-state electrolyte. This is not specifically limited herein.

When the positive electrode material layer is a plurality of layers, the positive electrode material layer may include a lithium supplement layer and a positive electrode active material layer, the lithium supplement layer includes the lithium supplement material provided in this disclosure, and the positive electrode active material layer includes the positive electrode active material. It should be noted that in addition to the lithium supplement material in this disclosure, the lithium supplement layer may further include some necessary auxiliary materials such as a conductive agent and an adhesive based on a requirement. This is not specifically limited herein. In addition to the positive electrode active material, the positive electrode active material layer may further include some necessary auxiliary materials such as a conductive agent and an adhesive based on a requirement. For a solid-state battery system, the lithium supplement layer and the positive electrode active material layer may not include an adhesive, but includes a solid-state electrolyte. In addition, the positive electrode active material layer may further include a specific quantity of lithium supplements based on a requirement. This is not specifically limited herein.

The positive electrode active material is a material that can reversibly release and embed active ions. In some implementations of this disclosure, the positive electrode active material includes one or more of lithium transition metal oxide and lithium-contained phosphate. In some implementations of this disclosure, the positive electrode active material may include but is not limited to one or more of lithium monoxide (for example, lithium cobaltate, lithium manganate, or lithium nickelate), lithium binary oxide (for example, lithium nickel manganate or lithium nickel cobaltate), lithium ternary oxide (for example, lithium nickel cobalt manganate ternary material or lithium nickel cobalt aluminate ternary material), and lithium-contained phosphate (for example, lithium iron phosphate or lithium manganese iron phosphate).

The adhesive and the conductive agent are conventional choices in the battery field. For example, the adhesive may be selected from one or more of polyvinylidene fluoride (PVDF), polytetrafluoroethylene (PTFE), polyvinyl alcohol (PVA), styrene butadiene rubber (SBR), polyacrylonitrile (PAN), polyimide (PI), polyacrylic acid (PAA), polyacrylate, polyolefin (for example, polyethylene, polypropylene, or polystyrene), sodium carboxymethyl cellulose (CMC), sodium alginate, and the like, but is not limited thereto. The conductive agent may be at least one of carbon black (for example, acetylene black or Ketjen black), carbon nanotube (CNT), graphene, carbon fiber, graphite, and the like, but is not limited thereto. In addition, the positive electrode current collector may include but is not limited to a metal film material and a foamed metal mesh, and may be specifically aluminum foil, carbon-coated aluminum foil, and the like.

In some implementations of this disclosure, a content of the lithium supplement material in the positive electrode material layer is 1 wt.% to 5 wt.%. In other words, a mass content of the lithium supplement material is 1 wt.% to 5 wt.% by using total mass of the positive electrode material layer as a reference. When the content of the lithium supplement material in the positive electrode material layer is within this range, it can be ensured that there is sufficient lithium supplement material for supplementing lithium, and a decrease in a content of the active material due to introduction of excessive lithium supplement material can be avoided, thereby overall improving initial coulomb efficiency and cycle performance of the battery.

In some implementations of this disclosure, the positive electrode active material includes at least one of lithium iron phosphate, a ternary material, lithium manganate, and lithium cobaltate.

This disclosure further provides an electrochemical apparatus, including the positive electrode in this disclosure.

The electrochemical apparatus in this disclosure may include any apparatus in which an electrochemical reaction occurs, and a specific instance of the electrochemical apparatus includes but is not limited to a primary battery, a secondary battery, and a capacitor. Optionally, the electrochemical apparatus may be a lithium-ion secondary battery.

In some implementations of this disclosure, the lithium-ion secondary battery includes the positive electrode, a negative electrode, a diaphragm disposed between the positive electrode and the negative electrode, and an electrolyte in this disclosure. In this disclosure, the negative electrode is a conventional choice in the battery field. For example, the negative electrode includes a negative electrode current collector and a negative electrode active material disposed on the negative electrode current collector. The negative electrode active material includes but is not limited to one or more of artificial graphite, natural graphite, a mesocarbon microbead (MCMB), a silicon carbon composite material, silicon oxide, a silicon alloy, lithium titanate, and the like. The negative electrode current collector may include but is not limited to a metal film material, a foamed metal mesh, and the like, and may be specifically a copper foil or the like. The diaphragm is used to separate the positive electrode and the negative electrode, to maintain insulation between the positive electrode and the negative electrode. The diaphragm, and the positive electrode and the negative electrode jointly form a pole core of the battery. The pole core is accommodated in a battery housing. The diaphragm may be a diaphragm commonly used in a battery, for example, a polymer diaphragm, a non-woven diaphragm, or a polymer/inorganic composite diaphragm, and includes but is not limited to a monolayer PP (polypropylene) film, a monolayer PE (polyethylene) film, a double-layer PP/PE diaphragm, a double-layer PP/PP diaphragm, and a three-layer PP/PE/PP diaphragm. The electrolyte is injected into the battery housing, and the electrolyte is a medium in which lithium ions are transmitted between positive and negative electrode plates. Specific composition of the electrolyte is a conventional choice in the battery field. This is not limited herein.

In some implementations of this disclosure, a method for preparing the lithium-ion secondary battery includes: sequentially stacking the positive electrode, the diaphragm, and the negative electrode to form the pole core, accommodating the pole core in the battery housing, injecting the electrolyte, and then sealing the battery housing, to obtain the lithium-ion battery.

In some implementations of this disclosure, the lithium-ion secondary battery includes the positive electrode, the negative electrode, and the solid-state electrolyte disposed between the positive electrode and the negative electrode in this disclosure. Specific composition of the negative electrode and the solid-state electrolyte is a conventional choice in the battery field. This is not limited herein.

This disclosure further provides a power consumption device, including the electrochemical apparatus provided in this disclosure.

The power consumption device in this disclosure includes but is not limited to an energy storage device, a vehicle, or an electronic product.

The following further describes the present invention in detail by using embodiments.

### Embodiment 1

A Zn(CH₃COO)₂ 2H₂O solution with a concentration of 0.5 mol/L is prepared by using deionized water as a solvent. Al(NO₃)₃ 9H₂O is added to the Zn(CH₃COO)₂ 2H₂O solution, and is stirred until completely dissolved to obtain a mixed solution containing Zn ions and Al ions. In the mixed solution, relative to a sum of amounts of substance of Zn ions and Al ions, a molar content of Al ions is 3 mol%. A NaHCO₃ solution with a concentration of 0.8 mol/L is added dropwise to the foregoing mixed solution containing Zn ions and Al ions while stirring, until a PH value reaches a specified value of 7 (±0.5). In this case, the NaHCO₃ solution stops being added dropwise, and stirring and aging are continued, to precipitate carbonate completely. After a carbonate precipitation reaction is completed, a precipitate is vacuum filtered and washed with deionized water, and then is dried in an oven at 80°C to obtain a precursor. Then, the precursor is calcined at a high temperature of 900°C to 1200°C in an oxidized atmosphere, to obtain Al ion-doped ZnO. In the Al ion-doped ZnO, relative to a sum of amounts of substance of Zn ions and Al ions, a molar content of Al ions is 3 mol%.

Lithium oxalate, iron oxide, and the foregoing Al ion-doped ZnO are mixed and ground to obtain a precursor, and the precursor is dried, sintered at a high temperature of 600°C in an inert atmosphere, and cooled to obtain a Li₅FeO₄ positive electrode lithium supplement material coated with Al ion-doped ZnO, where the positive electrode lithium supplement material is denoted as M1. In M1, a mass content of Al ion-doped ZnO is 5 wt.%.

M1 is mixed with a lithium iron phosphate positive electrode active material at a mass ratio of 3.5:96.5, to obtain an Ml-lithium iron phosphate mixed positive electrode material.

### Embodiment 2

A Zn(CH₃COO)₂ 2H₂O solution with a concentration of 0.5 mol/L is prepared by using deionized water as a solvent. Al(NO₃)₃ 9H₂O is added to the Zn(CH₃COO)₂ 2H₂O solution, and is stirred until completely dissolved to obtain a mixed solution containing Zn ions and Al ions. In the mixed solution, relative to a sum of amounts of substance of Zn ions and Al ions, a molar content of Al ions is 5 mol%. A NaHCO₃ solution with a concentration of 0.8 mol/L is added dropwise to the foregoing mixed solution containing Zn ions and Al ions while stirring, until a PH value reaches a specified value of 7 (±0.5). In this case, the NaHCO₃ solution stops being added dropwise, and stirring and aging are continued, to precipitate carbonate completely. After a carbonate precipitation reaction is completed, a precipitate is vacuum filtered and washed with deionized water, and then is dried in an oven at 80°C to obtain a precursor. Then, the precursor is calcined at a high temperature of 900°C to 1200°C in an oxidized atmosphere, to obtain Al ion-doped ZnO. In the Al ion-doped ZnO, relative to a sum of amounts of substance of Zn ions and Al ions, a molar content of Al ions is 5 mol%.

Lithium oxalate, iron oxide, and the foregoing Al ion-doped ZnO are mixed and ground to obtain a precursor, and the precursor is dried, sintered at a high temperature of 600°C in an inert atmosphere, and cooled to obtain a Li₅FeO₄ positive electrode lithium supplement material coated with Al ion-doped ZnO, where the positive electrode lithium supplement material is denoted as M2. In M2, a mass content of Al ion-doped ZnO is 5 wt.%.

M2 is mixed with a lithium iron phosphate positive electrode active material at a mass ratio of 3.5:96.5, to obtain an M2-lithium iron phosphate mixed positive electrode material.

### Embodiment 3

A Zn(CH₃COO)₂ 2H₂O solution with a concentration of 0.5 mol/L is prepared by using deionized water as a solvent. Zr(NO₃)₄·3H₂O is added to the Zn(CH₃COO)₂ 2H₂O solution, and is stirred until completely dissolved to obtain a mixed solution containing Zn ions and Zr ions. In the mixed solution, relative to a sum of amounts of substance of Zn ions and Zr ions, a molar content of Zr ions is 3 mol%. A NaHCO₃ solution with a concentration of 0.8 mol/L is added dropwise to the foregoing mixed solution containing Zn ions and Zr ions while stirring, until a PH value reaches a specified value of 7 (±0.5). In this case, the NaHCO₃ solution stops being added dropwise, and stirring and aging are continued, to precipitate carbonate completely. After a carbonate precipitation reaction is completed, a precipitate is vacuum filtered and washed with deionized water, and then is dried in an oven at 80°C to obtain a precursor. Then, the precursor is calcined at a high temperature of 900°C to 1200°C in an oxidized atmosphere, to obtain Zr ion-doped ZnO. In the Zr ion-doped ZnO, relative to a sum of amounts of substance of Zn ions and Zr ions, a molar content of Zr ions is 3 mol%.

Lithium oxalate, iron oxide, and the foregoing Zr ion-doped ZnO are mixed and ground to obtain a precursor, and the precursor is dried, sintered at a high temperature of 600°C in an inert atmosphere, and cooled to obtain a Li₅FeO₄ positive electrode lithium supplement material coated with Zr ion-doped ZnO, where the positive electrode lithium supplement material is denoted as M3. In M3, a mass content of Zr ion-doped ZnO is 5 wt.%.

M3 is mixed with a lithium iron phosphate positive electrode active material at a mass ratio of 3.5:96.5, to obtain an M3-lithium iron phosphate mixed positive electrode material.

### Embodiment 4

A Zn(CH₃COO)₂ 2H₂O solution with a concentration of 0.5 mol/L is prepared by using deionized water as a solvent. Ge(NO₃)₄ is added to the Zn(CH₃COO)₂ 2H₂O solution, and is stirred until completely dissolved to obtain a mixed solution containing Zn ions and Ge ions. In the mixed solution, relative to a sum of amounts of substance of Zn ions and Ge ions, a molar content of Ge ions is 2 mol%. A NaHCO₃ solution with a concentration of 0.8 mol/L is added dropwise to the foregoing mixed solution containing Zn ions and Ge ions while stirring, until a PH value reaches a specified value of 7 (±0.5). In this case, the NaHCO₃ solution stops being added dropwise, and stirring and aging are continued, to precipitate carbonate completely. After a carbonate precipitation reaction is completed, a precipitate is vacuum filtered and washed with deionized water, and then is dried in an oven at 80°C to obtain a precursor. Then, the precursor is calcined at a high temperature of 900°C to 1200°C in an oxidized atmosphere, to obtain Ge ion-doped ZnO. In the Ge ion-doped ZnO, relative to a sum of amounts of substance of Zn ions and Ge ions, a molar content of Ge ions is 3 mol%.

Lithium oxalate, iron oxide, and the foregoing Ge ion-doped ZnO are mixed and ground to obtain a precursor, and the precursor is dried, sintered at a high temperature of 600°C in an inert atmosphere, and cooled to obtain a Li₅FeO₄ positive electrode lithium supplement material coated with Ge ion-doped ZnO, where the positive electrode lithium supplement material is denoted as M4. In M4, a mass content of Ge ion-doped ZnO is 5 wt.%.

M4 is mixed with a lithium iron phosphate positive electrode active material at a mass ratio of 3.5:96.5, to obtain an M4-lithium iron phosphate mixed positive electrode material.

### Embodiment 5

A Zn(CH₃COO)₂ 2H₂O solution with a concentration of 0.5 mol/L is prepared by using deionized water as a solvent. Al(NO₃)₃ 9H₂O is added to the Zn(CH₃COO)₂ 2H₂O solution, and is stirred until completely dissolved to obtain a mixed solution containing Zn ions and Al ions. In the mixed solution, relative to a sum of amounts of substance of Zn ions and Al ions, a molar content of Al ions is 3 mol%. A NaHCO₃ solution with a concentration of 0.8 mol/L is added dropwise to the foregoing mixed solution containing Zn ions and Al ions while stirring, until a PH value reaches a specified value of 7 (±0.5). In this case, the NaHCO₃ solution stops being added dropwise, and stirring and aging are continued, to precipitate carbonate completely. After a carbonate precipitation reaction is completed, a precipitate is vacuum filtered and washed with deionized water, and then is dried in an oven at 80°C to obtain a precursor. Then, the precursor is calcined at a high temperature of 900°C to 1200°C in an oxidized atmosphere, to obtain Al ion-doped ZnO. In the Al ion-doped ZnO, relative to a sum of amounts of substance of Zn ions and Al ions, a molar content of Al ions is 3 mol%.

Lithium oxalate, iron oxide, and the foregoing Al ion-doped ZnO are mixed and ground to obtain a precursor, and the precursor is dried, sintered at a high temperature of 600°C in an inert atmosphere, and cooled to obtain a Li₅FeO₄ positive electrode lithium supplement material coated with Al ion-doped ZnO, where the positive electrode lithium supplement material is denoted as M5. In M5, a mass content of Al ion-doped ZnO is 2 wt.%.

M5 is mixed with a lithium iron phosphate positive electrode active material at a mass ratio of 3.5:96.5, to obtain an M5-lithium iron phosphate mixed positive electrode material.

### Embodiment 6

Embodiment 6 differs from Embodiment 1 only in that an amount of added Al(NO₃)₃ 9H₂O is adjusted, so that a molar content of Al ions in the obtained Al ion-doped ZnO is 0.5 mol%.

The obtained positive electrode lithium supplement material M6 is mixed with the lithium iron phosphate positive electrode active material at a mass ratio of 3.5:96.5, to obtain an M6-lithium iron phosphate mixed positive electrode material.

### Embodiment 7

Embodiment 7 differs from Embodiment 1 only in that an amount of added Al(NO₃)₃ 9H₂O is adjusted, so that a molar content of Al ions in the obtained Al ion-doped ZnO is 7 mol%.

The obtained positive electrode lithium supplement material M7 is mixed with a lithium iron phosphate positive electrode active material at a mass ratio of 3.5:96.5, to obtain an M7-lithium iron phosphate mixed positive electrode material.

### Embodiment 8

Embodiment 8 differs from Embodiment 1 only in that an amount of added Al ion-doped ZnO is adjusted, so that a mass content of Al ion-doped ZnO in the obtained positive electrode lithium supplement material M8 is 0.6 wt.%.

M8 is mixed with a lithium iron phosphate positive electrode active material at a mass ratio of 3.5:96.5, to obtain an M8-lithium iron phosphate mixed positive electrode material.

### Embodiment 9

Embodiment 9 differs from Embodiment 1 only in that an amount of added Al ion-doped ZnO is adjusted, so that a mass content of Al ion-doped ZnO in the obtained positive electrode lithium supplement material M9 is 8 wt.%.

M9 is mixed with a lithium iron phosphate positive electrode active material at a mass ratio of 3.5:96.5, to obtain an M9-lithium iron phosphate mixed positive electrode material.

### Embodiment 10

M1 is prepared according to a same method as that in Embodiment 1, and M1 is mixed with a lithium iron phosphate positive electrode active material at a mass ratio of 1:99, to obtain an M10-lithium iron phosphate mixed positive electrode material.

### Embodiment 11

M1 is prepared according to a same method as that in Embodiment 1, and M1 is mixed with a lithium iron phosphate positive electrode active material at a mass ratio of 5:95, to obtain an M11-lithium iron phosphate mixed positive electrode material.

### Embodiment 12

M1 is prepared according to a same method as that in Embodiment 1, and M1 is mixed with a lithium iron phosphate positive electrode active material at a mass ratio of 0.5:99.5, to obtain an M12-lithium iron phosphate mixed positive electrode material.

### Embodiment 13

Embodiment 13 differs from Embodiment 1 only in that Al(NO₃)₃ 9H₂O is replaced with a Ti(Cl)₃ 4H₂O aqueous solution, to obtain Ti ion-doped ZnO.

The obtained positive electrode lithium supplement material M13 is mixed with a lithium iron phosphate positive electrode active material at a mass ratio of 3.5:96.5, to obtain an M13-lithium iron phosphate mixed positive electrode material.

### Embodiment 14

Embodiment 14 differs from Embodiment 1 only in that the Zn(CH₃COO)₂ 2H₂O solution with a concentration of 0.5 mol/L is replaced with a Zn(CH₃COO)₂ 2H₂O solution with a concentration of 0.25 mol/L and a SnSO4 aqueous solution with a concentration of 0.25 mol/L, to obtain Al ion-doped ZnO . SnO.

The obtained positive electrode lithium supplement material M14 is mixed with a lithium iron phosphate positive electrode active material at a mass ratio of 3.5:96.5, to obtain an M14-lithium iron phosphate mixed positive electrode material.

### Embodiment 15

Al ion-doped ZnO is prepared in a same method as that in Embodiment 1.

Lithium oxalate, iron oxide, manganese oxalate, and the foregoing Al ion-doped ZnO are mixed and ground at a stoichiometric ratio of elements in Li₅Fe_{0.9}Mn_{0.1}O₄, to obtain a precursor, and the precursor is dried, sintered at a high temperature of 600°C in an inert atmosphere, and cooled to obtain a Li₅Fe_{0.9}Mn_{0.1}O₄ positive electrode lithium supplement material coated with Al ion-doped ZnO, where the positive electrode lithium supplement material is denoted as M15. In M15, a mass content of Al ion-doped ZnO is 5 wt.%.

M15 is mixed with a lithium iron phosphate positive electrode active material at a mass ratio of 3.5:96.5, to obtain an M15-lithium iron phosphate mixed positive electrode material.

### Comparative Example 1

A Zn(CH₃COO)₂ 2H₂O solution with a concentration of 0.5 mol/L is prepared by using deionized water as a solvent, and a NaHCO₃ solution with a concentration of 0.8 mol/L is added dropwise to the Zn(CH₃COO)₂ 2H₂O solution while stirring, until a PH value reaches a specified value of 7 (±0.5). In this case, the NaHCO₃ solution stops being added dropwise, and stirring and aging are continued, to precipitate carbonate completely. After a carbonate precipitation reaction is completed, a precipitate is vacuum filtered and washed with deionized water, and then is dried in an oven at 80°C to obtain a precursor. Then, the precursor is calcined at a high temperature of 900°C to 1200°C in an oxidized atmosphere, to obtain ZnO.

Lithium oxalate, iron oxide, and the foregoing ZnO are mixed and ground to obtain a precursor, and the precursor is dried, sintered at a high temperature of 600°C in an inert atmosphere, and cooled to obtain a Li₅FeO₄ positive electrode lithium supplement material coated with ZnO, where the positive electrode lithium supplement material is denoted as PM1. In PM1, a mass content of ZnO is 5 wt.%.

PM1 is mixed with a lithium iron phosphate positive electrode active material at a mass ratio of 3.5:96.5, to obtain a PM1-lithium iron phosphate mixed positive electrode material.

### Comparative Example 2

A lithium supplement material PM1 is prepared according to a same method as that in Comparative Example 1. Acetylene black is coated on a surface of PM1, to obtain PM2. PM2 includes a Li₅FeO₄ matrix, a first cladding layer, namely, a ZnO layer, on a surface of the Li₅FeO₄ matrix, and a second cladding layer, namely, a carbon layer, on a surface of the first cladding layer. In PM2, a mass content of ZnO is 3 wt.%, and a content of the carbon layer is 1.5%.

PM2 is mixed with a lithium iron phosphate positive electrode active material at a mass ratio of 3.5:96.5, to obtain a PM2-lithium iron phosphate mixed positive electrode material.

### Comparative Example 3

A carbon source (starch) is dispersed and mixed with iron oxide. After the carbon source is dispersed uniformly, a layer of a carbon source solution is coated on a surface of iron oxide under an action of surfactant, and then sintered at 600°C for 10 hours, to form a carbon layer on the surface of iron oxide.

The iron oxide coated with the carbon layer is mixed with lithium oxalate at a stoichiometric ratio of lithium and iron in Li₅FeO₄, mixed by using the wet ball-milling, and dried to obtain a precursor. The obtained precursor is sintered at 800°C in an inert atmosphere for 20 hours, and cooled to obtain Li₅FeO₄ whose surface is coated with carbon.

Li₅FeO₄ whose surface is coated with the carbon layer is added to a Zn(CH₃COO)₂ solution, and an ammonium hydroxide solution is slowly added to the mixture, and stirred until the solution is paste, to form a zinc hydroxide precipitation layer on a carbon layer surface of Li₅FeO₄ in situ. The material of Li₅FeO₄ whose carbon layer surface is formed with the zinc hydroxide precipitation layer in situ is sintered at 700°C for 9 hours in an inert atmosphere, and cooled to obtain a Li₅FeO₄ composite lithium supplement material coated with two layers of carbon and zinc oxide, which is denoted as PM3.

PM3 includes a Li₅FeO₄ matrix, a first cladding layer, namely, a carbon layer, on a surface of the Li₅FeO₄ matrix, and a second cladding layer, namely, a zinc oxide layer, on a surface of the first cladding layer. In PM3, mass of the carbon layer accounts for 1.5 wt% of PM3, and mass of the zinc oxide layer accounts for 3 wt% of PM3.

PM3 is mixed with a lithium iron phosphate positive electrode active material at a mass ratio of 3.5:96.5, to obtain PM3-lithium iron phosphate.

For Embodiments 1 to 13 and Comparative Examples 1 to 3, a particle diameter of the positive electrode lithium supplement material is tested by using a laser particle size analyzer (Mastersizer3000), and conductivity of a powder material is tested by using a powder resistor (FT-301B, with a pressure of 12 MPa). For the measured data, see Table 1.

**Table 1 Physical parameters of lithium supplement materials**

| | Embodiments 1 and 10 to 12 | Embodiment 2 | Embodiment 3 | Embodiment 4 | Embodiment 5 | Embodiment 6 | Embodiment 7 | Embodiment 8 | Embodiment 9 | Embodiment 13 | Embodiment 14 | Embodiment 15 | Comparative Example 1 | Comparative Example 2 | Comparative Example 3 |
|---|---|---|---|---|---|---|---|---|---|---|---|---|---|---|---|
| Number | M1 | M2 | M3 | M4 | M5 | M6 | M7 | M8 | M9 | M13 | M14 | M15 | PM1 | PM2 | PM3 |
| Cladding layer | Al-ZnO | Al-ZnO | Zr-ZnO | Ge-ZnO | Al-ZnO | Al-ZnO | Al-ZnO | Al-ZnO | Al-ZnO | Ti-ZnO | Al-ZnO-SnO | Al-ZnO | ZnO | ZnO-carbon | Carbon-ZnO |
| Content of the cladding layer (wt.%) | 5 | 5 | 5 | 5 | 5 | 5 | 5 | 0.6 | 8 | 5 | 5 | 5 | 5 | 4.5 | 4.5 |
| Doping element | Al | Al | Zr | Ge | Al | Al | Al | Al | Al | Ti | Al | Al | / | / | / |
| Doping amount (mol%) | 3 | 5 | 3 | 3 | 3 | *0.5* | 7 | 3 | 3 | 3 | 3 | 3 | 0 | 0 | 0 |
| D50 | 11.1 | 10.5 | 11.2 | 10.9 | 15.0 | 11.0 | 12.4 | 10.4 | 11.5 | 12.1 | 11.9 | 12.0 | 11.0 | 10.8 | 12.2 |
| D90 | 28.1 | 27.8 | 29 | 28.4 | 35.2 | 27.8 | 28.0 | 28.72 | 29.5 | 26.5 | 27.5 | 27.4 | 29.2 | 28.7 | 27.9 |
| Conductivity ρ-1 (S cm-1) | 1.80 | 1.61 | 1.78 | 1.52 | 1.48 | 1.25 | 1.69 | 1.45 | 1.80 | 1.70 | 1.75 | 1.51 | 1.12 | 1.18 | 1.10 |

The mixed positive electrode materials obtained in Embodiments 1 to 13 and Comparative Examples 1 to 3 are separately used, a cetylene black is a conductive agent, polyvinylidene fluoride (PVDF) is an adhesive, and N-methylpyrrolidone (NMP) is a dispersant. The mixed positive electrode material, acetylene black, PVDF, and NMP are uniformly mixed at a mass ratio: the mixed positive electrode material:acetylene black:PVDF:NMP = 85:10:5:50, and then coated by using an aluminum foil as a current collector. Then, the mixture is vacuum dried in an oven at 120°C for 24 hours, and after being tableted and cut, prepared into positive electrode plates S1-S13 and DSI-DS3.

Graphite is used as a negative electrode material, a styrene butadiene rubber (SBR) is used as an adhesive, a carboxymethyl cellulose sodium (CMC) is used as a thickener, and water (H₂O) is used as a dispersant. The graphite, SBR, CMC, and H₂O are uniformly mixed at a mass ratio: graphite:SBR:CMC:H₂O = 100:3:2:50, and then coated on a copper foil. Then, the mixture is dried in an oven at 90°C for 24 hours, and after being tableted and cut, prepared into negative electrode plates.

By using the positive electrode plates S1-S13 and DS1-DS3 as positive electrode plates, a celgard2400 polypropylene porous membrane as a diaphragm, and a mixed solution (where a volume ratio of EC to DMC is 1:1) of ethylene carbonate (EC) containing 1 mol/L LiPF₆ and dimethyl carbonate (DMC) as an electrolyte, a test battery in an argon-filled glove box is assembled to obtain battery samples C1-C13 and DC1-DC3.

An electrochemical performance test is performed on the battery samples C1-C13 and DC1-DC3 separately. By using a LAND CT 2001C secondary battery performance detection apparatus, under a temperature condition of 25±1°C, a charge/discharge cycle test is performed on the battery at 0.1C. Test steps are as follows: laying aside for 10 minutes; constant-current charging to 4.0 V at 0.1C; laying aside for 10 minutes; and constant-current discharging to 2.0 V at 0.1C. An initial discharge capacity and an initial charge capacity of the battery are recorded, where initial efficiency = initial discharge capacity/initial charge capacity × 100%.

A cycle performance test is performed on the battery in Embodiments and Comparative Examples. A test condition is as follows: by using a LAND CT 2001C secondary battery performance detection apparatus, under a temperature condition of 25±1°C, performing a charge/discharge cycle test on the battery at 0.2C. Test steps are as follows: laying aside for 10 minutes; constant-current charging to 4.0 V at 0.2C, and constant-voltage charging to 0.05C; laying aside for 10 minutes; and constant-current discharging to 0 V This is one cycle. Cycle capacity retention ratio = discharge capacity after 1000 cycles/cyclic initial discharge capacity × 100%.

The measured initial efficiency and initial efficiency of battery samples are shown in Table 2.

**Table 2 Initial efficiency and cycle capacity retention ratio of battery samples**

| Embodiment or Comparative Example | Battery sample number | Initial efficiency | Cycle capacity retention ratio (1000 times) |
|---|---|---|---|
| Embodiment 1 | C1 | 99.99% | 99.53% |
| Embodiment 2 | C2 | 98.00% | 98.99% |
| Embodiment 3 | C3 | 99.98% | 99.22% |
| Embodiment 4 | C4 | 95.55% | 97.21% |
| Embodiment 5 | C5 | 96.54% | 98.50% |
| Embodiment 6 | C6 | 91.32% | 95.27% |
| Embodiment 7 | C7 | 94.00% | 93.33% |
| Embodiment 8 | C8 | 90.52% | 92.75% |
| Embodiment 9 | C9 | 95.31% | 97.55% |
| Embodiment 10 | C10 | 97.02% | 98.36% |
| Embodiment 11 | C11 | 96.82% | 98.00% |
| Embodiment 12 | C12 | 91.04% | 94.20% |
| Embodiment 13 | C13 | 98.45% | 99.00% |
| Embodiment 14 | C14 | 99.0% | 99.02% |
| Embodiment 15 | C15 | 95.80% | 95.74% |
| Comparative Example 1 | DC1 | 83.00% | 85.20% |
| Comparative Example 2 | DC2 | 85.20% | 88.32% |
| Comparative Example 3 | DC3 | 85.10% | 87.58% |

It may be learned from the data in Table 1 and Table 2 that, from a perspective of a doping effect of M', Embodiment 1 > Embodiment 3 > Embodiment 13 > Embodiment 4, that is, Al > Zr > Ti > Ge. From a perspective of a doping amount of M', Embodiment 1 > Embodiment 2 > Embodiment 6 and Embodiment 7, that is, an optimal doping amount is 1 mol% to 5 mol%. From a perspective of a cladding amount of M'-doped ZnO, Embodiment 1 > Embodiment 8 and Embodiment 9, that is, an optimal cladding amount is 1 wt.% to 6 wt.%. This cladding amount can avoid a decrease in a content of an effective lithium supplement due to an excessively large cladding amount, which affects a lithium supplement capacity, or avoid a case in which an excessively small cladding amount cannot achieve a corresponding cladding effect, a capacity is incompletely utilized, and air stability of the lithium supplement is poor. From a perspective of a particle diameter, Embodiment 1 > Embodiment 5, indicating that D50 being 7 µm to 13 µm, and D90 being less than or equal to 30 µm are better. From a perspective of comparison between ZnO and ZnO composite oxide, Embodiment 1 > Embodiment 14, that is, ZnO has a better effect than ZnO composite oxide. All the foregoing embodiments are superior to the three comparative examples.

The foregoing descriptions are merely example implementations of this disclosure. It should be noted that a person of ordinary skill in the art can further make several improvements and modifications to this disclosure without departing from the principles of this disclosure, and the improvements and modifications fall within the protection scope of this disclosure.

## Claims

1. A lithium supplement material, comprising Li₅Fe₁₋ₓMₓO₄ and a cladding layer disposed on a surface of Li₅Fe₁₋ₓMₓO₄, wherein in Li₅Fe₁₋ₓMₓO₄, M is at least one of Ni, Mn, Ru, Cr, Cu, Nb, Al, Mg, Ca, Ga, Ti, and Mo, and 0 ≤ x ≤ 0.2; and the cladding layer comprises M'-doped zinc oxide or M'-doped composite oxide based on zinc oxide, and M' is an ion capable of forming a substitutional solid solution with zinc oxide or composite oxide based on zinc oxide.

2. The lithium supplement material according to claim 1, wherein x in Li₅Fe₁₋ₓMₓO₄ satisfies 0 ≤ x ≤ 0.1.

3. The lithium supplement material according to claim 1 or 2, wherein Li₅Fe₁₋ₓMₓO₄ is Li₅FeO₄.

4. The lithium supplement material according to any one of claims 1 to 3, wherein M' is at least one of Si⁴⁺, Ge⁴⁺, Ti⁴⁺, Zr⁴⁺, Mo⁴⁺, Sn⁴⁺, Al³⁺, Mo³⁺, Ti³⁺, Ga³⁺, In³⁺, and Y³⁺.

5. The lithium supplement material according to any one of claims 1 to 4, wherein M' is at least one of Zr⁴⁺, Mo³⁺, Ti³⁺, Ga³⁺, and Al³⁺

6. The lithium supplement material according to any one of claims 1 to 5, wherein the composite oxide based on zinc oxide is a composite oxide formed by at least one of SnO, ZrO₂, and B₂O₃ with ZnO.

7. The lithium supplement material according to any one of claims 1 to 6, wherein in the M'-doped zinc oxide or the M'-doped composite oxide based on zinc oxide, an amount of substance of M' accounts for 1 mol% to 5 mol% of a sum of amounts of substance of non-oxygen elements.

8. The lithium supplement material according to any one of claims 1 to 7, wherein in the M'-doped zinc oxide or the M'-doped composite oxide based on zinc oxide, an amount of substance of M' accounts for 2 mol% to 3 mol% of a sum of amounts of substance of non-oxygen elements.

9. The lithium supplement material according to any one of claims 1 to 8, wherein D50 of the lithium supplement material is 7 µm to 13 µm.

10. The lithium supplement material according to any one of claims 1 to 9, wherein D90 of the lithium supplement material is less than or equal to 30 µm.

11. The lithium supplement material according to any one of claims 1 to 10, wherein in the lithium supplement material, a mass percentage of the M'-doped zinc oxide or the M'-doped composite oxide based on zinc oxide is 1 wt.% to 6 wt.%.

12. A positive electrode, comprising a positive electrode current collector and a positive electrode material layer, wherein the positive electrode material layer comprises a positive electrode active material and the lithium supplement material according to any one of claims 1 to 11.

13. The positive electrode according to claim 12, wherein a content of the lithium supplement material in the positive electrode material layer is 1 wt.% to 5 wt.%.

14. The positive electrode according to claim 12 or 13, wherein the positive electrode active material comprises one or more of lithium transition metal oxide and lithium-contained phosphate.

15. The positive electrode according to any one of claims 12 to 14, wherein the positive electrode active material comprises at least one of lithium iron phosphate, a lithium nickel cobalt manganate ternary material, a lithium nickel cobalt aluminate ternary material, lithium manganate, and lithium cobaltate.

16. An electrochemical apparatus, comprising the positive electrode according to any one of claims 12 to 15.

17. A power consumption device, comprising the electrochemical apparatus according to claim 16.
